(19) 

Europäisches
Patentamt

European
Patent Office

Office européen
des brevets

(11) **EP 4 671 689 A1**

(12) **EUROPEAN PATENT APPLICATION**

published in accordance with Art. 153(4) EPC

(43) Date of publication:
**31.12.2025 Bulletin 2026/01**

(21) Application number: **24769770.9**

(22) Date of filing: **01.03.2024**

(51) International Patent Classification (IPC):
*G01C 21/34* (2006.01)   *B60W 30/18* (2012.01)

(52) Cooperative Patent Classification (CPC):
**B60W 30/18; G01C 21/34**

(86) International application number:
**PCT/CN2024/079629**

(87) International publication number:
**WO 2024/188076 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.03.2023 CN 202310280482**

(71) Applicant: **Shenzhen Yinwang Intelligent
Technologies Co., Ltd.
Shenzhen, Guangdong 518110 (CN)**

(72) Inventors:
• LIU, Yang
  Shenzhen, Guangdong 518129 (CN)
• QIAN, Chaojie
  Shenzhen, Guangdong 518129 (CN)
• LU, Xingyang
  Shenzhen, Guangdong 518129 (CN)
• SHI, Ling
  Shenzhen, Guangdong 518129 (CN)

(74) Representative: **Maiwald GmbH
Engineering
Elisenhof
Elisenstrasse 3
80335 München (DE)**

(54) **NAVIGATION METHOD AND SYSTEM, AND INTELLIGENT DRIVING DEVICE**

(57)     A navigation method and apparatus, and an intelligent driving device are provided. The method includes: determining a lane-level topology of a road between a current location and a target location of an intelligent driving device based on a road-level topology and a lane quantity that are of the road between the current location and the target location of the intelligent driving device; determining a feasibility of each lane-level path of at least two lane-level paths from the current location to the target location based on the lane-level topology; and generating first navigation information based on a current lane in which the intelligent driving device is located and the feasibility of each lane-level path, where the first navigation information indicates a first lane-level path from the current location to the target location. The method in this application may be applied to an intelligent driving device like a new energy vehicle or an electric vehicle, to implement lane-level navigation in a case in which a high definition map is unavailable, help improve navigation precision.

300

| S301: Determine a lane-level topology of a road between a current location and a target location of an intelligent driving device based on a road-level topology and a lane quantity that are of the road between the current location and the target location of the intelligent driving device |
| --- |

↓

| S302: Determine a feasibility of each lane-level path of at least two lane-level paths from the current location to the target location based on the lane-level topology |
| --- |

↓

| S303: Generate first navigation information based on a current lane in which the intelligent driving device is located and the feasibility of each lane-level path, where the first navigation information indicates a first lane-level path from the current location to the target location |
| --- |

FIG. 3

EP 4 671 689 A1

## Description

This application claims priority to Chinese Patent Application No. 202310280482.X, filed with the China National Intellectual Property Administration on March 16, 2023 and entitled "NAVIGATION METHOD AND SYSTEM, AND INTELLIGENT DRIVING DEVICE", which is incorporated herein by reference in its entirety.

## TECHNICAL FIELD

This application relates to the field of intelligent driving, and more specifically, to a navigation method and system, and an intelligent driving device.

## BACKGROUND

With rapid development of the automobile industry, a plurality of assisted driving and autonomous driving technologies have emerged, which can reduce driving pressure and improve safety and traffic efficiency. Current autonomous driving technologies mainly rely on a high definition map to perform lane-level navigation. However, production of the high definition map is costly and time-consuming, and is difficult to be promoted nationwide or globally.

In view of this, a lane-level navigation solution independent of the high definition map needs to be developed urgently.

## SUMMARY

This application provides a navigation method and apparatus, and an intelligent driving device, to implement lane-level navigation in a case in which a high definition map is unavailable, help improve navigation precision, and help promote and use autonomous driving nationwide or globally.

According to a first aspect, a navigation method is provided. The method may be performed by an intelligent driving device, for example, may be performed by a computing platform of the intelligent driving device, or may be performed by a chip or a circuit used for the intelligent driving device. Alternatively, the method may be performed by a cloud server associated with the intelligent driving device. This is not specifically limited in this application.

The intelligent driving device in this application may include a vehicle on a road, a vehicle on water, an air vehicle, an industrial device, an agricultural device, an entertainment device, or the like. For example, the intelligent driving device may be a vehicle in a broad sense, and may be a vehicle (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not limited in embodiments of this application. For another example, the intelligent driving device may be a vehicle like an aircraft or a ship.

The method includes: determining a lane-level topology of a road between a current location and a target location of an intelligent driving device based on a road-level topology and a lane quantity that are of the road between the current location and the target location of the intelligent driving device; determining a feasibility of each lane-level path of at least two lane-level paths from the current location to the target location based on the lane-level topology; and generating first navigation information based on a current lane in which the intelligent driving device is located and the feasibility of each lane-level path, where the first navigation information indicates a first lane-level path from the current location to the target location.

In the foregoing technical solution, the lane-level topology may be generated based on the road-level topology and the lane quantity. This helps generate lane-level navigation information without relying on a high definition map, improves navigation precision, and implements lane-level navigation without the high definition map, thereby facilitating promotion and application of an autonomous driving technology. The feasibility of each lane-level path is determined based on the lane-level topology, and the navigation information is determined with reference to the current lane of the intelligent driving device and the feasibility of each lane-level path, thereby helping improve traveling efficiency.

In some possible implementations, the feasibility of the lane-level path is represented by a score or a priority of the lane-level path. The score or the priority of the lane-level path may be determined based on a lane change cost and a total risk cost of the lane-level path.

With reference to the first aspect, in some implementations of the first aspect, the at least two lane-level paths include a second lane-level path, and the determining a feasibility of each lane-level path of at least two lane-level paths from the current location to the target location based on the lane-level topology includes: determining a lane change cost based on a remaining lane change distance during a lane change and/or a quantity of lane changes in the second lane-level path, where the lane change cost indicates impact of the lane change on traveling safety and comfort; determining a total risk cost based on a risk cost of each lane of lanes through which the second lane-level path passes, where the risk cost indicates a collision possibility of the intelligent driving device in the lane; and determining a feasibility of the second lane-level path based on the lane change cost and the total risk cost.

It may be understood that the feasibility of the second lane-level path is related only to the lane-level topology, and is irrelevant to a real-time road condition of the lane.

In the foregoing technical solution, a method for evaluating the feasibility of the lane-level path is provided. A lane risk and lane change necessity of the intelligent driving device are included in an evaluation system, to help improve human-like nature of the intelligent driving device and further help improve traveling safety and user comfort of the intelligent driving device. In addition, traffic efficiency of the intelligent driving device can be further improved.

With reference to the first aspect, in some implementations of the first aspect, the generating first navigation information based on a current lane in which the intelligent driving device is located and the feasibility of each lane-level path includes: generating second navigation information based on the current lane of the intelligent driving device and the feasibility of each lane-level path, where the second navigation information indicates a third lane-level path from the current location to the target location; and generating the first navigation information based on first environment information around the intelligent driving device and the second navigation information, where the first environment information includes at least one of an obstacle location, an obstacle density, and a road marking line in the current lane.

In a traveling process of the intelligent driving device, a road condition of a road may change in real time, which affects traveling. In the foregoing technical solution, the navigation information determined based on the feasibility of the lane-level path is corrected based on an actual road condition. This helps further improve traveling safety and traffic efficiency of the intelligent driving device.

With reference to the first aspect, in some implementations of the first aspect, the method further includes: controlling a display apparatus of the intelligent driving device to change from displaying the second navigation information to displaying the first navigation information.

In the foregoing technical solution, the lane-level navigation information may be updated in real time. When traveling is manually controlled, the intelligent driving device can recommend a lane-level path to a driver in advance, so that the driver makes a selection. In addition, this helps the driver change a route in a timely manner, thereby improving traffic efficiency and driving safety.

With reference to the first aspect, in some implementations of the first aspect, the generating second navigation information based on the current lane of the intelligent driving device and the feasibility of each lane-level path includes: determining the third lane-level path and a fourth lane-level path from the at least two lane-level paths based on the current lane of the intelligent driving device; and when a feasibility of the third lane-level path is higher, generating the second navigation information based on the third lane-level path.

In the foregoing technical solution, the navigation information is generated based on the lane-level path with the higher feasibility. This helps improve traveling safety and traveling efficiency.

With reference to the first aspect, in some implementations of the first aspect, the method further includes: determining a local lane-level topology of a current traveling road of the intelligent driving device based on second environment information around the intelligent driving device, where the second environment information indicates road boundaries of the current traveling road, and the current traveling road includes the current lane; and the generating first navigation information based on a current lane in which the intelligent driving device is located and the feasibility of each lane-level path includes: determining a matching degree between the local lane-level topology and a first part of the lane-level topology, where the first part is a part where the lane-level topology overlaps with the current traveling road; when the matching degree is less than or equal to a preset threshold, determining a fifth lane-level path of the intelligent driving device on the current traveling road based on the current lane, the feasibility of each lane-level path, and the local lane-level topology; and generating the first navigation information based on the fifth lane-level path.

For example, the matching degree may be determined based on an overlapping degree between the local lane-level topology and the first part of the lane-level topology.

For example, the preset threshold may be 90%, 95%, or another value.

In the foregoing technical solution, a navigation error caused by a map error can be corrected based on real-time environment information around the intelligent driving device, so that local planning can be dynamically implemented, and impact of a map difference and/or error can be reduced.

With reference to the first aspect, in some implementations of the first aspect, the road-level topology and/or the lane quantity are/is obtained from a standard definition (standard definition, SD) map, and the method further includes: reporting information about the local lane-level topology to a server when the matching degree is less than or equal to the preset threshold, for the server to update the SD map.

In the foregoing technical solution, map data is updated in real time based on real-time environment information around the intelligent driving device, and a difference and/or error of the map are/is corrected.

According to a second aspect, a navigation apparatus is provided, where the apparatus includes a first determining unit, a second determining unit, and a generation unit. The first determining unit is configured to: determine a lane-level topology of a road between a current location and a target location of an intelligent driving device based on a road-level topology and a lane quantity that are of the road between the current location and the target location of the intelligent driving device; the second determining unit is configured to determine a feasibility of each lane-level path of at least two lane-level paths from the current location to the target location based on the lane-level topology; and the generation unit is configured to generate first navigation information based on a current lane in which the intelligent driving device is located and the feasibility of each lane-level path, where the first navigation information indicates a first lane-level path from the current location to the target location.

With reference to the second aspect, in some implementations of the second aspect, the at least two lane-level paths include a second lane-level path, and the first determining unit is configured to determine a lane change cost based on a remaining lane change distance during a lane change and/or a quantity of lane changes in the second lane-level path, where the lane change cost indicates impact of the lane change on traveling safety and comfort; determine a total risk cost based on a risk cost of each lane of lanes through which the second lane-level path passes, where the risk cost indicates a collision possibility of the intelligent driving device in the lane; and determine a feasibility of the second lane-level path based on the lane change cost and the total risk cost.

With reference to the second aspect, in some implementations of the second aspect, the generation unit is configured to: generate second navigation information based on the current lane of the intelligent driving device and the feasibility of each lane-level path, where the second navigation information indicates a third lane-level path from the current location to the target location; and generate the first navigation information based on first environment information around the intelligent driving device and the second navigation information, where the first environment information includes at least one of an obstacle location, an obstacle density, and a road marking line in the current lane.

With reference to the second aspect, in some implementations of the second aspect, the apparatus further includes a processing unit, and the processing unit is configured to control a display apparatus of the intelligent driving device to change from displaying the second navigation information to displaying the first navigation information.

With reference to the second aspect, in some implementations of the second aspect, the generation unit is configured to: determine the third lane-level path and a fourth lane-level path from the at least two lane-level paths based on the current lane of the intelligent driving device; and when a feasibility of the third lane-level path is higher, generate the second navigation information based on the third lane-level path.

With reference to the second aspect, in some implementations of the second aspect, the apparatus further includes a third determining unit, configured to: determine a local lane-level topology of a current traveling road of the intelligent driving device based on second environment information around the intelligent driving device, where the second environment information indicates road boundaries of the current traveling road, and the current traveling road includes the current lane; and the generation unit is configured to: determine a matching degree between the local lane-level topology and a first part of the lane-level topology, where the first part is a part where the lane-level topology overlaps with the current traveling road; when the matching degree is less than or equal to a preset threshold, determine a fifth lane-level path of the intelligent driving device on the current traveling road based on the current lane, the feasibility of each lane-level path, and the local lane-level topology; and generate the first navigation information based on the fifth lane-level path.

With reference to the second aspect, in some implementations of the second aspect, the road-level topology and/or the lane quantity are/is obtained from an SD map, and the processing unit is further configured to: report information about the local lane-level topology to a server when the matching degree is less than or equal to the preset threshold, for the server to update the SD map.

According to a third aspect, a navigation apparatus is provided, where the apparatus includes: a memory, configured to store a computer program; a processor, configured to execute the computer program stored in the memory, so that the apparatus performs the method in any possible implementation of the first aspect.

According to a fourth aspect, an intelligent driving device is provided, where the intelligent driving device includes the navigation apparatus in any possible implementation of the second aspect.

With reference to the fourth aspect, in some implementations of the fourth aspect, the intelligent driving device is a vehicle.

According to a fifth aspect, a computer program product is provided, where the computer program product includes computer program code. When the computer program code is run on a computer, the computer is enabled to perform the method in any possible implementation of the first aspect.

It should be noted that all or some of the computer program code may be stored in a first storage medium. The first storage medium may be encapsulated together with a processor may be encapsulated separately from a processor.

According to a sixth aspect, a computer-readable medium is provided, where the computer-readable medium stores instructions. When the instructions are executed by a processor, the processor is enabled to implement the method in any possible implementation of the first aspect.

According to a seventh aspect, a chip is provided, where the chip includes a circuit, and the circuit is configured to perform the method in any possible implementation of the first aspect.

**BRIEF DESCRIPTION OF DRAWINGS**

FIG. 1 is a functional block diagram of an intelligent driving device according to an embodiment of this application;

FIG. 2 is a diagram of a system architecture required for implementing a navigation method according to an embodiment of this application;

FIG. 3 is a schematic flowchart of a navigation method according to an embodiment of this application;

FIG. 4 is a diagram of sub-road division according to an embodiment of this application;

FIG. 5 is a diagram of lane division according to an embodiment of this application;

FIG. 6 is a diagram of a navigation scenario according to an embodiment of this application;

FIG. 7 shows a GUI according to an embodiment of this application;

FIG. 8 is a schematic flowchart of a navigation method according to an embodiment of this application;

FIG. 9 is a block diagram of a navigation apparatus according to an embodiment of this application; and

FIG. 10 is a block diagram of a navigation apparatus according to an embodiment of this application.

**DESCRIPTION OF EMBODIMENTS**

In the descriptions of embodiments of this application, "/" means "or" unless otherwise specified. For example, A/B may represent A or B. In this specification, "and/or" describes an association relationship between associated objects and represents that three relationships may exist. For example, A and/or B may represent the following three cases. Only A exists, both A and B exist, and only B exists. In this application, at least one means one or more, and a plurality of means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

Before the solutions of this application are described, related concepts in this application are first described.

1. SD map: Precision is at a meter level and richness is low. Generally, the SD map mainly includes road information and point of interest (point of information or point of interest, (POI)). The POI is point data in an electronic map, and includes at least four attributes: a name, an address, coordinates, and a category.

2. High definition (HD) map: Precision and richness of the HD map are higher than those of an SD map. Absolute precision and relative precision of the HD map are both at a centimeter level. In terms of richness, the HD map provides an environment model of an autonomous driving vehicle, including a static high definition map and other dynamic information. The static high definition map includes a lane model, a road component, a road attribute, and the like. The lane model includes road details, such as a lane line, a lane center line, and a lane attribute change. The other dynamic information includes all dynamic information in an intelligent network system, such as map dynamic information, sensor information, driving behavior, and traffic dynamic information control.

3. Road-level topology: a connection relationship between two or more roads, including information such as road forks and intersections.

4. Lane-level topology: a connection relationship that may exist between lanes when a vehicle travels on two connected roads and travels from one road to another road.

As described above, the current autonomous driving technology mainly relies on the HD map for lane-level navigation. In an area in which the HD map is unavailable, autonomous driving behavior of a vehicle is affected, or even autonomous driving cannot be completed, which limits promotion and use of autonomous driving nationwide or globally.

In view of this, embodiments of this application provide a navigation method and system, and an intelligent driving device, so that lane-level navigation can be implemented based on an SD map, and navigation information can be planned without dependency on the HD map.

The following describes technical solutions in embodiments of this application with reference to accompanying drawings.

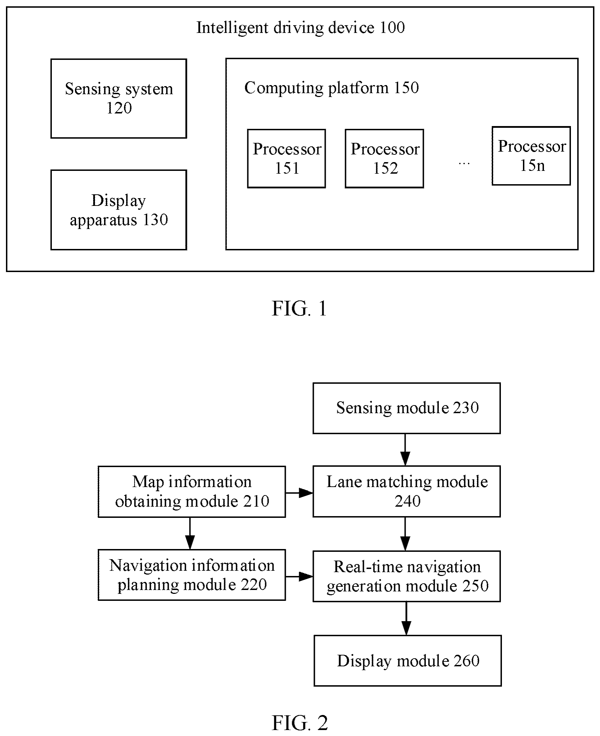

FIG. 1 is a functional block diagram of an intelligent driving device 100 according to an embodiment of this application. The intelligent driving device 100 may include a sensing system 120, a display apparatus 130, and a computing platform 150. The sensing system 120 may include one or more sensors that sense environment information around the intelligent driving device 100. For example, the sensing system 120 may include a positioning system. The positioning system may be a global positioning system (GPS), a BeiDou system or another positioning system, or an inertial measurement unit (IMU). For another example, the sensing system 120 may further include one or more of a lidar, a millimeter-wave radar, an ultrasonic radar, and a photographing apparatus.

The display apparatus 130 in a cockpit is mainly classified into two types: a first type is a vehicle-mounted display, and a second type is a projection display, for example, a head-up display apparatus (HUD). The vehicle-mounted display is a physical display, and is an important part of an in-vehicle infotainment system. The vehicle-mounted display may include a humanmachine interface (HMI). The head-up display, also referred to as a head-up display system, is mainly configured to display driving information such as a speed and navigation on a display device (for example, a windshield) in front of a user, to reduce sight line diversion time of the user, avoid a pupil change caused by sight line diversion of the user, and improve traveling safety and comfort.

Some or all functions of the intelligent driving device 100 may be controlled by the computing platform 150. The computing platform 150 may include one or more processors, such as processors 151 to 15n (n is a positive integer). The processor is a circuit having an instruction processing capability. In an implementation, the processor may be a circuit having an instruction reading and running capability, for example, a central processing unit (CPU), a microprocessor, a graphics processing unit (GPU) (which may be understood as a microprocessor), or a digital signal processor (DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (ASIC) or a programmable logic device (PLD), for example, a field programmable gate array (FPGA). In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural network processing unit (NPU), a tensor processing unit (TPU), or a deep learning processing unit (DPU). In addition, the computing platform 150 may further include a memory. The memory is configured to store instructions. Some or all of the processors 151 to 15n may invoke the instructions in the memory and execute the instructions, to implement a corresponding function.

In embodiments of this application, the computing platform 150 may generate navigation information based on an SD map and the environment information that is around the intelligent driving device and that is obtained by the sensing system 120, and control the display apparatus 130 to display the navigation information.

The intelligent driving device 100 may include an advanced driving assistance system (ADAS). The ADAS obtains information around the intelligent driving device by using a plurality of sensors (including but not limited to a lidar, a millimeter-wave radar, a photographing apparatus, an ultrasonic sensor, a global positioning system, and an inertial measurement unit) on the intelligent driving device, and analyzes and processes the obtained information, to implement functions such as obstacle sensing, target recognition, intelligent driving device positioning, path planning, and user monitoring/reminding. This improves driving safety, automation, and comfort of the intelligent driving device.

In terms of logical functions, the ADAS system generally includes three main functional modules: a sensing module, a decision-making module, and an execution module. The sensing module senses an environment around a vehicle body by using a sensor, and inputs corresponding real-time data to a processing center of the decision-making module. The sensing module mainly includes a vehicle-mounted camera, an ultrasonic radar, a millimeter-wave radar, a lidar, or the like. The decision-making module uses a computing apparatus and an algorithm to make a corresponding decision based on information obtained by the sensing module. After receiving a decision instruction from the decision-making module, the execution module takes a corresponding action, for example, driving, a lane change, steering, braking, or warning.

Under different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (SAE). L0 indicates no automation, L1 indicates driving support, L2 indicates partial automation, L3 indicates conditional automation, L4 indicates high automation, and L5 indicates full automation. Tasks of monitoring and responding to road conditions at L1 to L3 are jointly completed by the user and the system, and the user needs to take over a dynamic driving task. L4 and L5 allow the user to completely change to a role of a passenger. Currently, functions that can be implemented by the ADAS mainly include but are not limited to: adaptive cruise control, automatic emergency braking, automatic parking assist, blind spot monitoring, traffic warning/braking at front crossroads, traffic warning/braking at rear crossroads, front vehicle collision warning, lane deviation warning, lane keeping assistance, rear vehicle collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode, requires higher precision of sensing and regulation control algorithms, and has a higher requirement for lane-level navigation.

FIG. 2 is a diagram of an architecture of a navigation system according to an embodiment of this application. As shown in FIG. 2, the system includes a map information obtaining module 210, a navigation information planning module 220, a sensing module 230, a lane matching module 240, a real-time navigation generation module 250, and a display module 260. The map information obtaining module 210 and the navigation information planning module 220 may be separately one or more processors in the computing platform 150 shown in FIG. 1, or may be separately one or more processors in a cloud server associated with the intelligent driving device 100. The map information obtaining module 210 is configured to extract, from an SD map, a road-level topology of a road between a current location and a target location of an intelligent driving device, and send the road-level topology to the navigation information planning module 220. The navigation information planning module 220 is configured to determine a lane-level topology of the road between the current location and the target location of the intelligent driving device based on the road-level topology and a lane quantity that are of the road between the current location and the target location of the intelligent driving device. The sensing module 230 may include one or more photographing apparatuses or one or more radar sensors in the sensing system 120 shown in FIG. 1, and is configured to collect environment information around the intelligent driving device. The environment information includes road information such as road boundaries and a lane line of a road on which the intelligent driving device currently travels. The lane matching module 240 and the real-time navigation generation module 250 may be separately one or more processors in the computing platform 150 shown in FIG. 1. The lane matching module 240 determines, based on the road information collected by the sensing module 230, a current lane of the intelligent driving device, and then sends lane information to the real-time navigation generation module 250. The real-time navigation generation module 250 generates a real-time navigation path based on the lane information and the lane-level topology determined by the navigation information planning module 220. Further, the real-time navigation generation module 250 may send information about the real-time navigation path to the display module 260, so that the display module 260 displays the real-time navigation path to a user of the intelligent driving device. The display module 260 may include one or more displays of the display apparatus 130 shown in FIG. 1, for example, the HMI.

It should be understood that the foregoing modules are merely examples. In actual application, the foregoing modules may be added or deleted based on an actual requirement. For example, in the system architecture shown in FIG. 2, the map information obtaining module 210 and the navigation information planning module 220 may be combined into one module.

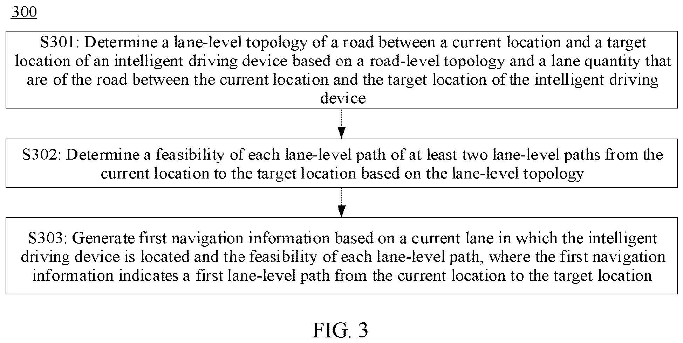

FIG. 3 is a schematic flowchart of a navigation method according to an embodiment of this application. The method may be applied to the intelligent driving device shown in FIG. 1, or the method may be performed by the system shown in FIG. 2. For example, the following uses an example in which the method is performed by a computing platform of an intelligent driving device for description. A method 300 may include the following steps.

S301: Determine a lane-level topology of a road between a current location and a target location of an intelligent driving device based on a road-level topology and a lane quantity that are of the road between the current location and the target location of the intelligent driving device.

For example, the current location of the intelligent driving device may be identified by a positioning system, for example, a GPS of the intelligent driving device, or may be user input of the intelligent driving device. The target location of the intelligent driving device may be user input of the intelligent driving device.

For example, the road-level topology and the lane quantity may be obtained from an SD map, or may be obtained from another data source.

The road between the current location and the target location may pass through two or more intersections, and the road may include two or more sub-roads.

In some possible implementations, the road may be divided into two or more sub-roads by using a travel-in location and a travel-off location of a risk area as a reference. The risk area may include at least one of the following: a bus lane, a tidal lane, an intersection, lane combination, and lane splitting, where the intersection includes a road combination location, a road splitting location, a ramp intersection, and the like. In other words, lane quantities of two connected sub-roads may be different, or lane quantities of two connected sub-roads may be the same.

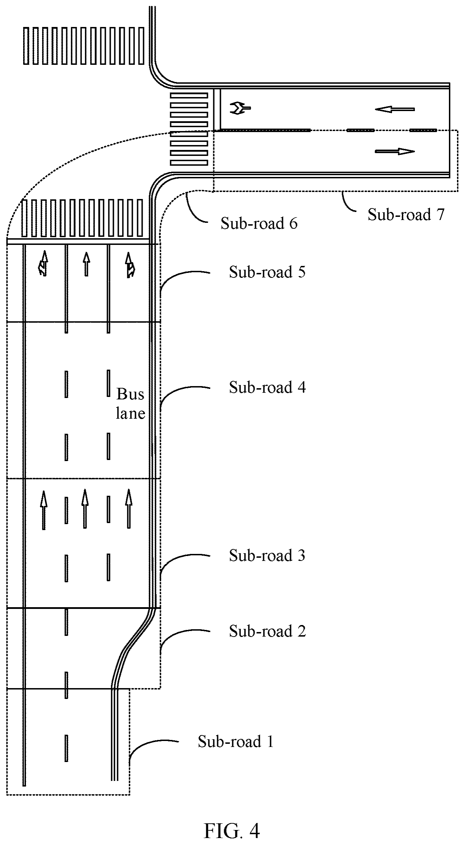

The following describes a sub-road division manner with reference to FIG. 4. As shown in FIG. 4, a road includes a sub-road 1 to a sub-road 7. The sub-road 2 is obtained through division based on lane combination, the sub-road 4 is obtained through division based on a bus lane, the sub-road 6 is obtained through division based on an intersection, and connection parts between sub-roads obtained through division based on risk areas are determined as other sub-roads, for example, the sub-road 1, the sub-road 3, the sub-road 5, and the sub-road 7.

It may be understood that the road-level topology includes the foregoing sub-roads and connection relationships between the sub-roads, and determining a lane-level topology based on the road-level topology and the lane quantity includes:

performing lane division on the sub-road based on the sub-road and a lane quantity of the sub-road, determining a lane center line of each lane in the sub-road, and determining a lane connection relationship between two sub-roads based on the lane center line and a connection relationship between the sub-roads, where the lane connection relationship forms the lane-level topology.

It should be noted that, during lane division, a road may be divided into two or more lanes by using a fixed lane width; or a width of the sub-road may be set to a fixed value, and lane division may be performed by dividing the fixed value by a lane quantity; or lane division may be performed in another manner, and the lane width has small impact on determining the lane-level topology.

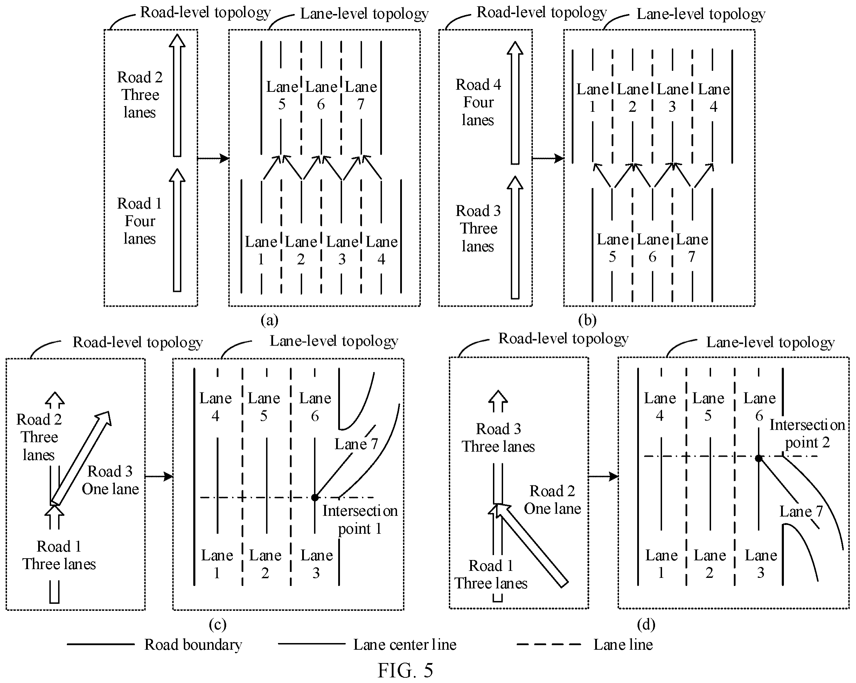

The following describes an implementation of determining the lane-level topology with reference to FIG. 5. A road 1 to a road 4 are examples of the foregoing sub-roads.

In an example, as shown in (a) in FIG. 5, a road-level topology indicates that the road 1 including four lanes is connected to a road 2 including three lanes. In this case, a lane 1 to a lane 4 may be obtained through division based on the road 1, and a lane 5 to a lane 7 may be obtained through division based on the road 2. When the intelligent driving device travels from the road 1 to the road 2, there may be the following traveling paths: traveling from the lane 1 to the lane 5, traveling from the lane 2 to the lane 5, traveling from the lane 2 to the lane 6, traveling from the lane 3 to the lane 6, traveling from the lane 3 to the lane 7, and traveling from the lane 4 to the lane 7. The traveling paths form the lane-level topology between the road 1 and the road 2.

In another example, as shown in (b) in FIG. 5, a road-level topology indicates that a road 3 including three lanes is connected to a road 4 including four lanes. In this case, a lane 5 to a lane 7 may be obtained through division based on the road 3, and a lane 1 to a lane 4 may be obtained through division based on the road 4. When the intelligent driving device travels from the road 3 to the road 4, there may be the following traveling paths: traveling from the lane 5 to the lane 1, traveling from the lane 5 to the lane 2, traveling from the lane 6 to the lane 2, traveling from the lane 6 to the lane 3, traveling from the lane 7 to the lane 3, and traveling from the lane 7 to the lane 4. The traveling paths form the lane-level topology between the road 3 and the road 4.

In still another example, as shown in (c) in FIG. 5, a road-level topology indicates that a road 1 including three lanes, a road 2 including three lanes, and a road 3 including one lane are connected (for example, in a scenario of traveling out of a main road). In this case, a lane 1 to a lane 3 may be obtained through division based on the road 1, a lane 4 to a lane 6 may be obtained through division based on the road 2, and a lane 7 may be obtained through division based on the road 3. When the intelligent driving device travels from the road 1 to the road 2, there may be the following traveling paths: traveling from the lane 1 to the lane 4, traveling from the lane 1 to the lane 5, traveling from the lane 2 to the lane 4, traveling from the lane 2 to the lane 5, traveling from the lane 3 to the lane 4, and traveling from the lane 3 to the lane 5. The traveling paths form the lane-level topology between the road 1 and the road 2. When the intelligent driving device travels from the road 1 to the road 3, there may be the following traveling path: traveling from the lane 3 to the lane 7. The traveling paths form the lane-level topology between the road 1 and the road 3. An intersection point 1 may be determined based on a connection location of the road 1, the road 2, and the road 3.

In still another example, as shown in (d) in FIG. 5, a road-level topology indicates that a road 1 including three lanes, a road 3 including three lanes, and a road 2 including one lane are connected (for example, in a scenario of merging into a main road). In this case, a lane 1 to a lane 3 may be obtained through division based on the road 1, a lane 4 to a lane 6 may be obtained through division based on the road 3, and a lane 7 may be obtained through division based on the road 2. When the intelligent driving device travels from the road 1 to the road 3, there may be the following traveling paths: traveling from the lane 1 to the lane 4, traveling from the lane 1 to the lane 5, traveling from the lane 2 to the lane 4, traveling from the lane 2 to the lane 5, traveling from the lane 3 to the lane 4, and traveling from the lane 3 to the lane 5. The traveling paths form the lane-level topology between the road 1 and the road 3. When the intelligent driving device travels from the road 2 to the road 3, there may be the following traveling path: traveling from the lane 7 to the lane 6. The traveling paths form the lane-level topology between the road 2 and the road 3. An intersection point 2 may be determined based on a connection location of the road 1, the road 2, and the road 3.

S302: Determine a feasibility of each lane-level path of at least two lane-level paths from the current location to the target location based on the lane-level topology.

In some possible implementations, a method for determining a feasibility of a second lane-level path from the current location to the target location may be: determining a lane change cost based on a remaining lane change distance during a lane change and/or a quantity of lane changes in the second lane-level path, where the lane change cost indicates impact of the lane change on traveling safety and comfort; determining a total risk cost based on a risk cost of each lane of lanes through which the second lane-level path passes, where the risk cost indicates a collision possibility of the intelligent driving device in the lane; and determining a feasibility of the second lane-level path based on the lane change cost and the total risk cost. The second lane-level path is any lane-level path in the at least two lane-level paths from the current location to the target location.

For example, the lane change cost may be determined according to the following formula (1):

$$cost_{CL}=c_1*\frac{D_{max}-D_{re}}{D_{max}-D_{min}}+c_2*N_{CL} \quad (1)$$

Herein, $cost_{CL}$ is the lane change cost, $D_{re}$ is the remaining lane change distance, and the remaining lane change distance is a distance from the current location of the intelligent driving device to a location corresponding to a latest lane change occasion. A smaller remaining lane change distance indicates poorer comfort and safety of a lane change. $D_{max}$ is a lane change distance that is set by a system and that is required for a lane change when traveling safety and user comfort are ensured, and $D_{min}$ is a lane change limit distance that is set by the system, that is, a minimum distance that is allowed by the system and that is between the location corresponding to the latest lane change occasion and a location at which the intelligent driving device changes a lane. $N_{CL}$ is the quantity of lane changes. Herein, $c_1$ is an exponential coefficient corresponding to a lane change distance, and increases exponentially as the remaining lane change distance decreases, $c_2$ is a single lane change cost, and is related to lane change necessity, and $c_1$ and $c_2$ may be positive numbers. It can be learned that when quantities of lane changes are the same, a smaller remaining lane change distance corresponding to the lane change point indicates a larger lane change cost; or when remaining lane change distances corresponding to lane change points are the same, a larger quantity of lane changes indicates a larger lane change cost.

For example, the total risk cost may be determined according to the following formula (2):

$$cost_{R_i} = \sum_i r_i * R_i \quad (2)$$

Herein, $cost_{R_i}$ is the total risk cost, $R_i$ is a risk cost of a lane $i$ through which the lane-level path passes, $r_i$ is a weight value corresponding to a risk cost of the lane $i$, $r_i$ may be a positive number, and $i$ is a positive integer.

In some possible implementations, the weight value may be associated with a ratio of the mileage corresponding to the path of the lane to a total lane-level path mileage. A larger ratio of the mileage corresponding to the path of the lane to the total lane-level path mileage indicates a larger weight value corresponding to the risk cost of the lane.

For example, the risk cost of the lane $i$ is determined based on at least one of the following: a location of the lane on a road, whether there is a risk area on the road on which the lane is located, and a distance between the lane and the risk area on the road. Table 1 shows several examples of risk cost values corresponding to lanes. In a specific implementation process, if the lane $i$ includes two or more scenarios, the risk cost of the lane $i$ may be a weighted sum of risk costs corresponding to the two or more scenarios.

For example, if the lane $i$ is a left side lane, the lane passes through a bus lane, and the lane passes through an area in which a lane quantity changes, the risk cost of the lane $i$ is $R_i = 3 * a + 2 * b + 3 * c$, where $a$, $b$, and $c$ are respectively weights corresponding to scenarios in which the lane is the left side lane, the lane passes through the bus lane, and the lane passes through the area in which the lane quantity changes, and $a$, b, and c may separately be values in 0 to 1.

Table 1

| Scenario: | Risk cost |
|---|---|
| The lane is the left side lane | 3 |
| The lane is a right side lane | 2 |
| The lane is a middle lane | 1 |
| The lane passes through the bus lane | 2 |
| The lane passes through a temporary parking lane | 2 |
| The lane passes through the area in which the lane quantity changes | 3 |
| The lane passes through an intersection (for example, a ramp intersection) | 3 |

Further, after the lane change cost and the total risk cost of the second lane-level path are determined, the feasibility of the second lane-level path is determined based on the lane change cost and the total risk cost. For example, the feasibility may be determined according to the following formula (3):

$$S_{ve} = s_1 * cost_{CL} + s_2 * cost_{R_i} \quad (3)$$

Herein, $S_{ve}$ is a score, and may indicate a feasibility of a lane-level path, $s_1$ and $s_2$ are weights of the lane change cost and the total risk cost, and $s_1$ and $s_2$ may separately be values in 0 to 1.

It may be understood that, in the formula (3), a larger value of $S_{ve}$ indicates a lower feasibility of the lane-level path.

In a specific implementation process, the feasibility of the lane-level path may also be represented by using the foregoing score, or may be represented by using a priority, or may be represented in another manner.

S303: Generate first navigation information based on a current lane in which the intelligent driving device is located and the feasibility of each lane-level path, where the first navigation information indicates a first lane-level path from the current location to the target location.

In some possible implementations, the method further includes: generating second navigation information based on the current lane of the intelligent driving device and the feasibility of each lane-level path, where the second navigation information indicates a third lane-level path from the current location to the target location; and generating the first navigation information based on first environment information around the intelligent driving device and the second navigation information, where the first environment information includes at least one of an obstacle location, an obstacle density, and a road marking line in the current lane.

The obstacle may include an object that affects traveling of the intelligent driving device in the lane, and may include another object that travels in the lane, for example, a motor vehicle or a non-motor vehicle; and may include a static object in the lane, for example, a roadblock. In an example, an obstacle density may be represented based on a traffic volume of vehicles passing through a first road section within first duration. A larger traffic volume indicates a higher obstacle density. The first road section may be a road section within a preset distance in front of the intelligent driving device. The first duration may be fixed duration before the intelligent driving travels to the first road section. The fixed duration may be, for example, 1 minute, 3 minutes, or other duration. The preset distance may be 50 meters, 100 meters, or another value.

The road marking line may include at least one of the following: a white solid line, a yellow solid line, double white solid lines, and double yellow solid lines.

For example, a lane-level path whose start point is the current lane and whose score is the lowest may be determined as the third lane-level path from the at least two lane-level paths based on the current lane of the intelligent driving device.

For example, in a traveling process of the intelligent driving device, a real-time risk level of a lane may be determined based on an obstacle location and/or an obstacle density, and a real-time lane change recommendation value of the lane is determined based on a road marking line, to correct the third lane-level path based on the real-time risk level and the real-time lane change recommendation value, to obtain the first lane-level path. For example, a lane change frequency of an obstacle on each lane may be determined based on a change status of the obstacle location, and a real-time risk level is determined based on the lane change frequency. A higher lane change frequency of an obstacle in a lane indicates a higher real-time risk level.

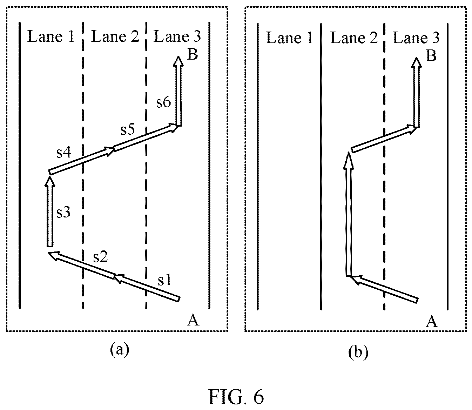

As shown in (a) in FIG. 6, if a lane-level topology determines that risk levels of a lane 1 to a lane 3 gradually decrease, to ensure traveling safety, when an intelligent driving device travels from A to B, a planned traveling path 1 may include: s1 in which the intelligent driving device changes from the lane 3 to a lane 2, s2 in which the intelligent driving device changes from the lane 2 to the lane 1, s3 in which the intelligent driving device cruises in the lane 1, s4 in which the intelligent driving device changes from the lane 1 to the lane 2, s5 in which the intelligent driving device changes from the lane 2 to the lane 3, and s6 in which the intelligent driving device cruises in the lane 3.

If an obstacle density in the lane 1 is greater than or equal to a first preset density threshold, and an obstacle density in the lane 2 is less than a second preset density threshold, where the first preset density threshold is greater than the second preset density threshold, in this case, it is determined that a real-time risk level of the lane 1 is higher than a real-time risk level of the lane 2, that is, real-time risk levels of the lane 1 and the lane 3 are both higher than the real-time risk level of the lane 2. A planned traveling path 2 may include a path in which the intelligent driving device changes from the lane 3 to the lane 2, a path in which the intelligent driving device cruises in the lane 2, a path in which the intelligent driving device changes from the lane 2 to the lane 3, and a path in which the intelligent driving device cruises in the lane 3.

As shown in (a) in FIG. 6, if there is a long solid line between the lane 1 and the lane 2, for example, any one of a white solid line, a yellow solid line, double white solid lines, and double yellow solid lines, a planned traveling path 3 may include a path in which the intelligent driving device changes from the lane 3 to the lane 2, a path in which the intelligent driving device cruises in the lane 2, a path in which the intelligent driving device changes from the lane 2 to the lane 3, and a path in which the intelligent driving device cruises in the lane 3.

The traveling path 1 may be understood as an example of the second lane-level path, and the traveling path 2 and the traveling path 3 may be understood as examples of the first lane-level path.

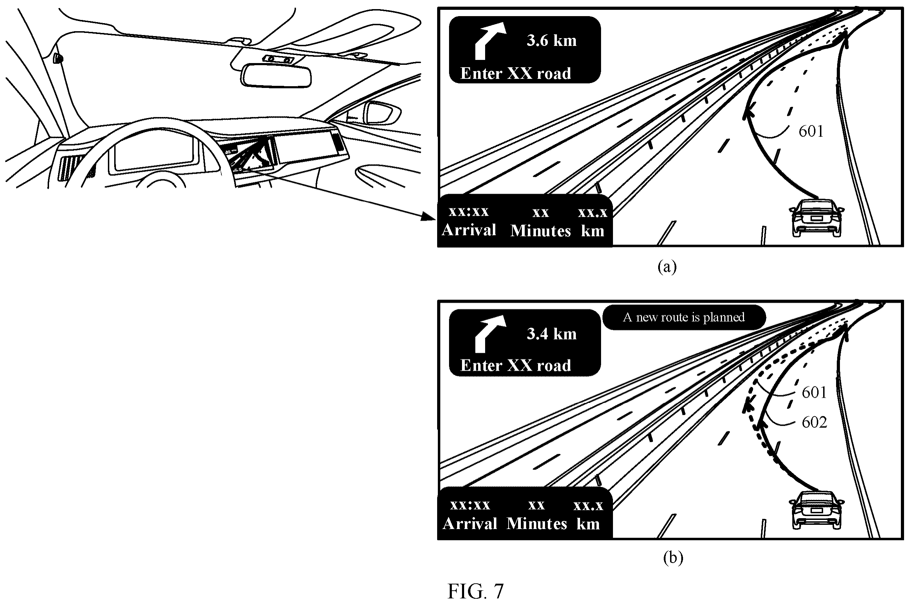

Further, after navigation information changes, a graphical user interface (GUI) displayed by a display apparatus of the intelligent driving device changes from displaying the second navigation information to displaying the first navigation information. As shown in FIG. 7, an example in which the display apparatus is a central display screen is used. A navigation route included in a GUI displayed on the central display screen is changed from 601 shown in (a) in FIG. 7 to 602 shown in (b) in FIG. 7. It may be understood that 601 is an example of the second lane-level path, and 602 is an example of the first lane-level path.

It should be noted that the navigation route shown in FIG. 7 is merely an example for description. In a specific implementation process, another graph or form may be used to represent the navigation route.

In some possible implementations, the lane-level topology determined based on the SD map is not accurate enough. In embodiments of this application, the lane-level topology may be further corrected based on real-time sensed environment information, to improve accuracy of the navigation information.

For example, a local lane-level topology of a current traveling road of the intelligent driving device may be determined based on second environment information around the intelligent driving device, where the second environment information indicates road boundaries of the current traveling road, and the current traveling road includes the current lane; a matching degree between the local lane-level topology and a first part of the lane-level topology is determined, where the first part is a part where the lane-level topology overlaps with the current traveling road; when the matching degree is less than or equal to a preset threshold a fifth lane-level path of the intelligent driving device on the current traveling road is determined based on the local lane-level topology and the current lane; and the first navigation information is generated based on the fifth lane-level path.

For example, the matching degree may be determined based on an overlapping degree between the local lane-level topology and the first part of the lane-level topology. The preset threshold may be 90%, 95%, or another value.

Further, when the matching degree is less than or equal to the preset threshold, information about the local lane-level topology may be reported to a server, so that the server updates a part corresponding to the local lane-level topology in the SD map.

According to the navigation method provided in embodiments of this application, lane-level navigation can be implemented without dependency on a high definition map, thereby improving a generalization capability of an autonomous driving system. Navigation information may be updated in real time with reference to an actual road condition, thereby improving traffic efficiency of an intelligent driving device. In addition, the navigation information may be updated in real time by using a display device of the intelligent driving device, thereby improving user experience.

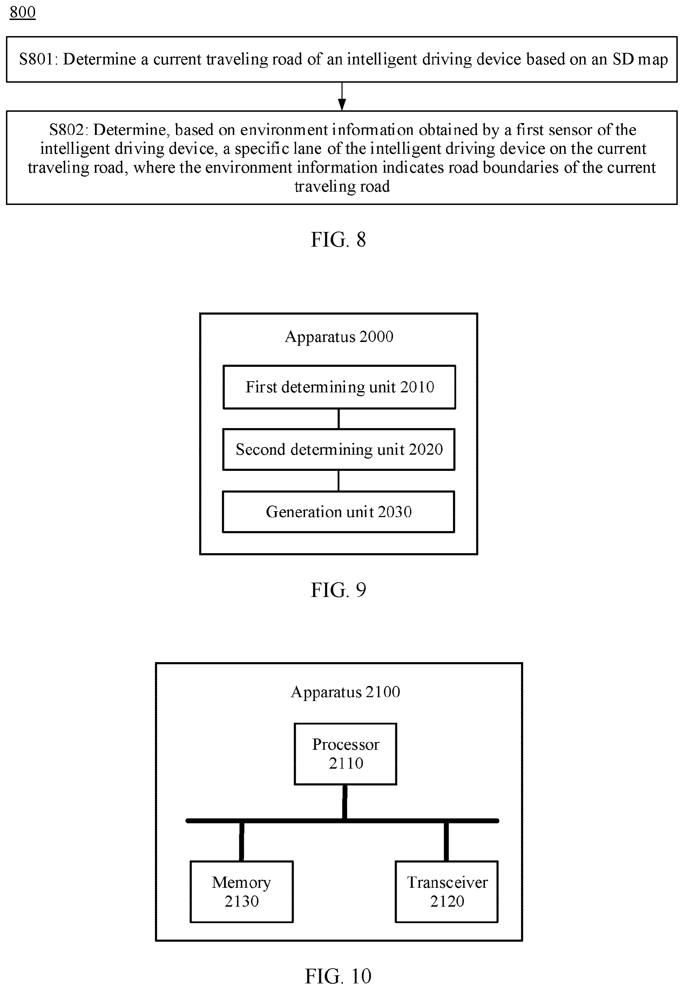

FIG. 8 is another schematic flowchart of a navigation method according to an embodiment of this application. The method may be applied to the intelligent driving device shown in FIG. 1, or the method may be performed by the system shown in FIG. 2. The method may be understood as extension of the method 300. For example, the following uses an example in which the method is performed by a computing platform of an intelligent driving device for description. A method 800 may include the following steps.

S801: Determine a current traveling road of an intelligent driving device based on an SD map.

For example, a map-match algorithm may be used to perform matching between the SD map and GPS data, to obtain an SD road ID, to determine the current traveling road of the intelligent driving device.

In some possible implementations, a vertical location of the intelligent driving device on the current traveling road may be further adjusted based on lane information recognized by a sensor of the intelligent driving device, to correct an error that is based on the SD map. The lane information includes information such as a lane quantity, lane splitting, and lane combination.

S802: Determine, based on environment information obtained by a first sensor of the intelligent driving device, a specific lane of the intelligent driving device on the current traveling road (referred to as a specific lane), where the environment information indicates road boundaries of the current traveling road.

For example, the specific lane may be an example of the first lane.

It may be understood that one road may include two road boundaries, and an area within the two road boundaries is an area in which the intelligent driving device can travel. For example, the road boundary may include but is not limited to a road shoulder, double yellow lines, and a central isolation belt.

For example, a lane quantity $N_{left}$ on the left side of the intelligent driving device and a lane quantity $N_{right}$ on the right side of the intelligent driving device may be determined based on the road boundaries, where both $N_{left}$ and $N_{right}$ are integers greater than or equal to 0. In this case, a total lane quantity $N_{total}=N_{left}+N_{right}+1$ of the current traveling road is determined based on the environment information.

Further, because a lane quantity $N_{SD}$ recorded in the SD map may be incorrect, or a lane quantity sensed by the sensor of the intelligent driving device is incorrect, $N_{total}$ is not equal to $N_{SD}$. In this case, a specific lane may be determined based on a comparison result of $N_{total}$ and $N_{SD}$.

When $N_{total} \leq N_{SD}$, if a distance between a left lane line of a leftmost lane and a left road boundary is less than or equal to a preset distance threshold, the specific lane is an $(N_{left}+1)^{th}$ lane counted from the left; or if a distance between a right lane line of a rightmost lane and a right road boundary is less than or equal to a preset distance threshold, the specific lane is an $(N_{SD}-N_{right})^{th}$ lane counted from the left.

When $N_{total} > N_{SD}$, if lane splitting occurs in front of the road, and the intelligent driving device needs to pass through a right lane obtained after the splitting, the specific lane is an $(N_{total}-N_{SD})^{th}$ lane counted from the left; if lane splitting occurs in front of the road, and the intelligent driving device needs to pass through a left lane obtained after the splitting, the specific lane is an $(N_{left}+1)^{th}$ lane counted from the left; if lane combination occurs in front of the road, and the intelligent driving device enters the combined lane from a right lane, the vehicle is currently on an $(N_{SD}-N_{right})^{th}$ lane counted from the left; and if lane combination occurs in front of the road, and the intelligent driving device enters the combined lane from a left lane, the vehicle is currently on an $(N_{left}+1)^{th}$ lane counted from the left to the right. In other cases, it is considered that the specific lane is an $(N_{left}+1)^{th}$ lane counted from the left.

According to the navigation method provided in embodiments of this application, a current lane of the intelligent driving device can be determined in real time, thereby helping generate navigation information in real time.

In various embodiments of this application, unless otherwise stated or there is a logic conflict, terms and/or descriptions in different embodiments are consistent and may be mutually referenced, and technical features in various embodiments may be combined based on an internal logical relationship thereof, to form a new embodiment.

The foregoing describes in detail the methods provided in embodiments of this application with reference to FIG. 1 to FIG. 8. The following describes in detail the apparatuses provided in embodiments of this application with reference to FIG. 9 and FIG. 10. It should be understood that descriptions of the apparatus embodiments correspond to descriptions of the method embodiments. Therefore, for content that is not described in detail, refer to the foregoing method embodiments. For brevity, details are not described herein again.

FIG. 9 is a block diagram of a navigation apparatus 2000 according to an embodiment of this application. The apparatus 2000 includes a first determining unit 2010, a second determining unit 2020, and a generation unit 2030.

The apparatus 2000 may include units configured to perform the methods in FIG. 3 and FIG. 8. In addition, the units in the apparatus 2000 are separately used to implement corresponding procedures of the method embodiments in FIG. 3 and FIG. 8.

When the apparatus 2000 is configured to perform the method 300 in FIG. 3, the first determining unit 2010 may be configured to perform S301 in the method 300, the second determining unit 2020 may be configured to perform S302 in the method 300, and the generation unit 2030 may be configured to perform S303 in the method 300.

Specifically, the first determining unit 2010 is configured to determine a lane-level topology of a road between a current location and a target location of an intelligent driving device based on a road-level topology and a lane quantity that are of the road between the current location and the target location of the intelligent driving device; the second determining unit 2020 is configured to determine a feasibility of each lane-level path of at least two lane-level paths from the current location to the target location based on the lane-level topology; and the generation unit 2030 is configured to generate first navigation information based on a current lane in which the intelligent driving device is located and the feasibility of each lane-level path, where the first navigation information indicates a first lane-level path from the current location to the target location.

In some possible implementations, the at least two lane-level paths include a second lane-level path, and the first determining unit 2010 is configured to: determine a lane change cost based on a remaining lane change distance during a lane change and/or a quantity of lane changes in the second lane-level path, where the lane change cost indicates impact of the lane change on traveling safety and comfort; determine a total risk cost based on a risk cost of each lane of lanes through which the second lane-level path passes, where the risk cost indicates a collision possibility of the intelligent driving device in the lane; and determine a feasibility of the second lane-level path based on the lane change cost and the total risk cost.

In some possible implementations, the generation unit 2030 is configured to: generate second navigation information based on the current lane of the intelligent driving device and the feasibility of each lane-level path, where the second navigation information indicates a third lane-level path from the current location to the target location; and generate the first navigation information based on first environment information around the intelligent driving device and the second navigation information, where the first environment information includes at least one of an obstacle location, an obstacle density, and a road marking line in the current lane.

In some possible implementations, the apparatus 2000 further includes a processing unit, and the processing unit is configured to control a display apparatus of the intelligent driving device to change from displaying the second navigation information to displaying the first navigation information.

In some possible implementations, the generation unit 2030 is configured to: determine the third lane-level path and a fourth lane-level path from the at least two lane-level paths based on the current lane of the intelligent driving device; and when a feasibility of the third lane-level path is higher, generate the second navigation information based on the third lane-level path.

In some possible implementations, the apparatus 2000 further includes a third determining unit, configured to: determine a local lane-level topology of a current traveling road of the intelligent driving device based on second environment information around the intelligent driving device, where the second environment information indicates road boundaries of the current traveling road, and the current traveling road includes the current lane; and the generation unit 2030 is configured to: determine a matching degree between the local lane-level topology and a first part of the lane-level topology, where the first part is a part where the lane-level topology overlaps with the current traveling road; when the matching degree is less than or equal to a preset threshold, determine a fifth lane-level path of the intelligent driving device on the current traveling road based on the current lane, the feasibility of each lane-level path, and the local lane-level topology; and generate the first navigation information based on the fifth lane-level path.

In some possible implementations, the road-level topology and/or the lane quantity are/is obtained from an SD map, and the processing unit is further configured to: report information about the local lane-level topology to a server when the matching degree is less than or equal to the preset threshold, for the server to update the SD map.

For example, the first determining unit 2010 may be disposed in the navigation information planning module 220 shown in FIG. 2, and the second determining unit 2020 and the generation unit 2030 may be disposed in the real-time navigation generation module 250 shown in FIG. 2. In some possible implementations, the first determining unit 2010, the second determining unit 2020, and the generation unit 2030 may be disposed in the intelligent driving device 100 shown in FIG. 1. More specifically, the first determining unit 2010, the second determining unit 2020, and the generation unit 2030 may be disposed in the computing platform 150 shown in FIG. 1. The third determining unit and the processing unit may also be disposed in the computing platform 150 shown in FIG. 1.

It should be understood that division into units of the foregoing apparatus is merely logical function division, and during actual implementation, all or some of the units may be integrated into a physical entity, or the units may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. For example, the processor is a general purpose processor, for example, a CPU or a microprocessor, and the memory is a memory in the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD, for example, an FPGA, and the FPGA may include a large quantity of logic gate circuits, and a connection relationship between the logic gate circuits is configured by using a configuration file, to implement the functions of some or all of the foregoing units. All the units of the foregoing apparatus may be implemented in the form of software invoked by the processor, or may be implemented in the form of the hardware circuit, or some of the units are implemented in the form of software invoked by the processor, and remaining units are implemented in the form of the hardware circuit.

Each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated together and implemented in a form of a system-on-a-chip (SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a specific implementation process, the operations performed by the first determining unit 2010, the second determining unit 2020, and the generation unit 2030 may be performed by one processor, or may be performed by different processors. In addition, the operations performed by the first determining unit 2010, the second determining unit 2020, and the generation unit 2030, and the operations performed by the third determining unit and the processing unit may be performed by a same processor, or may be performed by different processors. In a specific implementation process, the one or more processors may be processors disposed in the computing platform 150 shown in FIG. 1, or the apparatus 2000 may be a chip disposed in the intelligent driving device 100.

FIG. 10 is a block diagram of a navigation apparatus according to an embodiment of this application. The navigation apparatus 2100 shown in FIG. 10 may include a processor 2110, a transceiver 2120, and a memory 2130. The processor 2110, the transceiver 2120, and the memory 2130 are connected by using an internal connection path. The memory 2130 is configured to store instructions. The processor 2110 is configured to execute the instructions stored in the memory 2130, to implement the navigation methods in the foregoing embodiments. Optionally, the memory 2130 may be coupled to the processor 2110 by using an interface, or may be integrated with the processor 2110.

It should be noted that the transceiver 2120 may include but is not limited to a transceiver apparatus of an input/output interface type, to implement communication between the apparatus 2100 and another device or a communication network.

The memory 2130 may be a read-only memory (ROM), a static storage device, a dynamic storage device, or a random access memory (RAM).

The transceiver 2120 uses, for example, but is not limited to, a transceiver apparatus of a transceiver type, to implement communication between the apparatus 2100 and another device or a communication network, to receive/send data/information used to implement the navigation methods in the foregoing embodiments.

In a specific implementation process, the apparatus 2100 may be disposed in the computing platform 150 shown in FIG. 1, or the apparatus 2100 may be disposed in the system shown in FIG. 2.

An embodiment of this application further provides an intelligent driving device. The intelligent driving device includes the foregoing apparatus 2000 or the foregoing apparatus 2100.

In some possible implementations, the intelligent driving device may be a vehicle.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, steps in the foregoing methods can be implemented by using a hardware integrated logic circuit in a processor, or by using instructions in a form of software. The method disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A navigation method, comprising:

    determining a lane-level topology of a road between a current location and a target location of an intelligent driving device based on a road-level topology and a lane quantity that are of the road between the current location and the target location of the intelligent driving device;
    determining a feasibility of each lane-level path of at least two lane-level paths from the current location to the target location based on the lane-level topology; and
    generating first navigation information based on a current lane in which the intelligent driving device is located and the feasibility of each lane-level path, wherein the first navigation information indicates a first lane-level path from the current location to the target location.

2.  The method according to claim 1, wherein the at least two lane-level paths comprise a second lane-level path, and the determining a feasibility of each lane-level path of at least two lane-level paths from the current location to the target location based on the lane-level topology comprises:

    determining a lane change cost based on a remaining lane change distance during a lane change and/or a quantity of lane changes in the second lane-level path, wherein the lane change cost indicates impact of the lane change on traveling safety and comfort;

determining a total risk cost based on a risk cost of each lane of lanes through which the second lane-level path passes, wherein the risk cost indicates a collision possibility of the intelligent driving device in the lane; and determining a feasibility of the second lane-level path based on the lane change cost and the total risk cost.

3. The method according to claim 1 or 2, wherein the generating first navigation information based on a current lane in which the intelligent driving device is located and the feasibility of each lane-level path comprises:

generating second navigation information based on the current lane of the intelligent driving device and the feasibility of each lane-level path, wherein the second navigation information indicates a third lane-level path from the current location to the target location; and
generating the first navigation information based on first environment information around the intelligent driving device and the second navigation information, wherein
the first environment information comprises at least one of an obstacle location, an obstacle density, and a road marking line in the current lane.

4. The method according to claim 3, wherein the method further comprises:
controlling a display apparatus of the intelligent driving device to change from displaying the second navigation information to displaying the first navigation information.

5. The method according to claim 3, wherein the generating second navigation information based on the current lane of the intelligent driving device and the feasibility of each lane-level path comprises:

determining the third lane-level path and a fourth lane-level path from the at least two lane-level paths based on the current lane of the intelligent driving device; and
when a feasibility of the third lane-level path is higher, generating the second navigation information based on the third lane-level path.

6. The method according to any one of claims 1 to 5, wherein the method further comprises:

determining a local lane-level topology of a current traveling road of the intelligent driving device based on second environment information around the intelligent driving device, wherein the second environment information indicates road boundaries of the current traveling road, and the current traveling road comprises the current lane; and
the generating first navigation information based on a current lane in which the intelligent driving device is located and the feasibility of each lane-level path comprises: determining a matching degree between the local lane-level topology and a first part of the lane-level topology, wherein the first part is a part where the lane-level topology overlaps with the current traveling road;
when the matching degree is less than or equal to a preset threshold, determining a fifth lane-level path of the intelligent driving device on the current traveling road based on the current lane, the feasibility of each lane-level path, and the local lane-level topology; and
generating the first navigation information based on the fifth lane-level path.

7. The method according to claim 6, wherein the road-level topology and/or the lane quantity are/is obtained from a standard definition (SD) map, and the method further comprises:
reporting information about the local lane-level topology to a server when the matching degree is less than or equal to the preset threshold, for the server to update the SD map.

8. A navigation apparatus, comprising a first determining unit, a second determining unit, and a generation unit, wherein

the first determining unit is configured to determine a lane-level topology of a road between a current location and a target location of an intelligent driving device based on a road-level topology and a lane quantity that are of the road between the current location and the target location of the intelligent driving device;
the second determining unit is configured to determine a feasibility of each lane-level path of at least two lane-level paths from the current location to the target location based on the lane-level topology; and
the generation unit is configured to generate first navigation information based on a current lane in which the intelligent driving device is located and the feasibility of each lane-level path, wherein the first navigation information indicates a first lane-level path from the current location to the target location.

9. The apparatus according to claim 8, wherein the at least two lane-level paths comprise a second lane-level path, and the first determining unit is configured to:

determine a lane change cost based on a remaining lane change distance during a lane change and/or a quantity of lane changes in the second lane-level path, wherein the lane change cost indicates impact of the lane change on traveling safety and comfort;
determine a total risk cost based on a risk cost of each lane of lanes through which the second lane-level path passes, wherein the risk cost indicates a collision possibility of the intelligent driving device in the lane; and
determine a feasibility of the second lane-level path based on the lane change cost and the total risk cost.

10. The apparatus according to claim 8 or 9, wherein the generation unit is configured to:

generate second navigation information based on the current lane of the intelligent driving device and the feasibility of each lane-level path, wherein the second navigation information indicates a third lane-level path from the current location to the target location; and
generate the first navigation information based on first environment information around the intelligent driving device and the second navigation information, wherein
the first environment information comprises at least one of an obstacle location, an obstacle density, and a road marking line in the current lane.

11. The apparatus according to claim 10, wherein the apparatus further comprises a processing unit, and the processing unit is configured to:
control a display apparatus of the intelligent driving device to change from displaying the second navigation information to displaying the first navigation information.

12. The apparatus according to claim 10, wherein the generation unit is configured to:

determine the third lane-level path and a fourth lane-level path from the at least two lane-level paths based on the current lane of the intelligent driving device; and
when a feasibility of the third lane-level path is higher, generate the second navigation information based on the third lane-level path.

13. The apparatus according to any one of claims 8 to 12, wherein the apparatus further comprises a third determining unit, configured to:

determine a local lane-level topology of a current traveling road of the intelligent driving device based on second environment information around the intelligent driving device, wherein the second environment information indicates road boundaries of the current traveling road, and the current traveling road comprises the current lane; and
the generation unit is configured to:

determine a matching degree between the local lane-level topology and a first part of the lane-level topology, wherein the first part is a part where the lane-level topology overlaps with the current traveling road;
when the matching degree is less than or equal to a preset threshold, determine a fifth lane-level path of the intelligent driving device on the current traveling road based on the current lane, the feasibility of each lane-level path, and the local lane-level topology; and
generate the first navigation information based on the fifth lane-level path.

14. The apparatus according to claim 13, wherein the road-level topology and/or the lane quantity are/is obtained from a standard definition SD map, and the processing unit is further configured to:
report information about the local lane-level topology to a server when the matching degree is less than or equal to the preset threshold, for the server to update the SD map.

15. A navigation apparatus, comprising:

a memory, configured to store a computer program; and
a processor, configured to execute the computer program stored in the memory, for the apparatus to perform the method according to any one of claims 1 to 7.

16. An intelligent driving device, comprising the apparatus according to any one of claims 8 to 14.

17. A computer-readable storage medium, wherein the computer-readable storage medium stores instructions, and when the instructions are executed by a processor, the processor is enabled to implement the method according to any one of claims 1 to 7.

18. A chip, wherein the chip comprises a circuit, and the circuit is configured to perform the method according to any one of claims 1 to 7.

Intelligent driving device 100

Sensing system 120

Display apparatus 130

Computing platform 150

Processor 151

Processor 152

...

Processor 15n

FIG. 1

Sensing module 230

Map information obtaining module 210

Lane matching module 240

Navigation information planning module 220

Real-time navigation generation module 250

Display module 260

FIG. 2

300

| S301: Determine a lane-level topology of a road between a current location and a target location of an intelligent driving device based on a road-level topology and a lane quantity that are of the road between the current location and the target location of the intelligent driving device |
|---|

| S302: Determine a feasibility of each lane-level path of at least two lane-level paths from the current location to the target location based on the lane-level topology |
|---|

| S303: Generate first navigation information based on a current lane in which the intelligent driving device is located and the feasibility of each lane-level path, where the first navigation information indicates a first lane-level path from the current location to the target location |
|---|

FIG. 3

Sub-road 7

Sub-road 6

Sub-road 5

Sub-road 4

Bus lane

Sub-road 3

Sub-road 2

Sub-road 1

FIG. 4

FIG. 5

FIG. 6

3.6 km
Enter XX road
XX:XX  XX  XX.X
Arrival  Minutes  km
601
(a)

A new route is planned
3.4 km
Enter XX road
601
602
XX:XX  XX  XX.X
Arrival  Minutes  km
(b)

FIG. 7

800

S801: Determine a current traveling road of an intelligent driving device based on an SD map

S802: Determine, based on environment information obtained by a first sensor of the intelligent driving device, a specific lane of the intelligent driving device on the current traveling road, where the environment information indicates road boundaries of the current traveling road

FIG. 8

Apparatus 2000

First determining unit 2010

Second determining unit 2020

Generation unit 2030

FIG. 9

Apparatus 2100

Processor 2110

Memory 2130

Transceiver 2120

FIG. 10

**EP 4 671 689 A1**

## INTERNATIONAL SEARCH REPORT

| International application No. |
|---|
| **PCT/CN2024/079629** |

| A. | CLASSIFICATION OF SUBJECT MATTER |
|---|---|

G01C21/34(2006.01)i; B60W30/18 (2012.01)i

According to International Patent Classification (IPC) or to both national classification and IPC

| B. | FIELDS SEARCHED |
|---|---|

Minimum documentation searched (classification system followed by classification symbols)

G01C21/-; B60W30/-

Documentation searched other than minimum documentation to the extent that such documents are included in the fields searched

Electronic data base consulted during the international search (name of data base and, where practicable, search terms used)

CNABS, CNTXT, ENTXTC, OETXT, VEN, WPABS, WPABSC, CNKI, IEEE, 百度学术, BAIDU SCHOLAR: 华为技术有限公司, 刘阳, 陆星阳, 钱超杰, 石灵; 安全, 变道, 车道, 代价, 导航, 道路, 得分, 动态, 风险, 环境, 换道, 局部, 可行程度, 路径, 路线, 门限, 碰撞, 匹配, 评分, 评估, 评价, 成本, 权值, 权重, 设定, 剩余变道距离, 剩余换道距离, 实时, 舒适, 拓扑, 相似, 预定, 预设, 阈值; current, dynamic, environment, lane, local, path, Preset, realtime, road, route, threshold, Topology, weight, match+, chang+, similar+, guid+, cost+, scor+, navigat+, evaluat+.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113418530 A (APTIV ELECTRONICS (SUZHOU) CO., LTD.) 21 September 2021 (2021-09-21) description, paragraphs 46, 49, 53, 65, and 70-76, claim 17, and figures 1-4 | 1, 8, 15-18 |
| X | CN 108663059 A (AUTONAVI INFORMATION TECHNOLOGY CO., LTD.) 16 October 2018 (2018-10-16) description, paragraphs 55, 62, 82-83, and 92 | 1, 8, 15-18 |
| Y | CN 113418530 A (APTIV ELECTRONICS (SUZHOU) CO., LTD.) 21 September 2021 (2021-09-21) description, paragraphs 46, 49, 53, 65, and 70-76, claim 17, and figures 1-4 | 2-5, 9-12 |
| Y | CN 108663059 A (AUTONAVI INFORMATION TECHNOLOGY CO., LTD.) 16 October 2018 (2018-10-16) description, paragraphs 55, 62, 82-83, and 92 | 2-5, 9-12 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 April 2024** | **29 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

25

# EP 4 671 689 A1

**INTERNATIONAL SEARCH REPORT**

| International application No. |
| --- |
| **PCT/CN2024/079629** |

## C. DOCUMENTS CONSIDERED TO BE RELEVANT

| Category* | Citation of document, with indication, where appropriate, of the relevant passages | Relevant to claim No. |
| --- | --- | --- |
| Y | CN 113928337 A (HUAWEI TECHNOLOGIES CO., LTD.) 14 January 2022 (2022-01-14) description, paragraphs 85-86, 159-163, and 179 | 2, 9 |
| Y | CN 114543825 A (HUAWEI TECHNOLOGIES CO., LTD.) 27 May 2022 (2022-05-27) description, paragraph 222 | 3-5, 10-12 |
| A | CN 115014374 A (CHONGQING CHANG'AN AUTOMOBILE CO., LTD.) 06 September 2022 (2022-09-06) entire document | 1-18 |
| A | CN 108027242 A (HUAWEI TECHNOLOGIES CO., LTD.) 11 May 2018 (2018-05-11) entire document | 1-18 |
| A | CN 115493611 A (CHONGQING CHANG'AN AUTOMOBILE CO., LTD.) 20 December 2022 (2022-12-20) entire document | 1-18 |
| A | JP 2022094311 A (CONTINENTAL AUTOMOTIVE GMBH) 24 June 2022 (2022-06-24) entire document | 1-18 |
| A | CN 112164238 A (BEIJING BAIDU NETCOM SCIENCE AND TECHNOLOGY CO., LTD.) 01 January 2021 (2021-01-01) entire document | 1-18 |

Form PCT/ISA/210 (second sheet) (July 2022)

## INTERNATIONAL SEARCH REPORT
### Information on patent family members

International application No.

**PCT/CN2024/079629**

| Patent document cited in search report | | | Publication date (day/month/year) | Patent family member(s) | | | Publication date (day/month/year) |
|---|---|---|---|---|---|---|---|
| CN | 113418530 | A | 21 September 2021 | None | | | |
| CN | 108663059 | A | 16 October 2018 | None | | | |
| CN | 113928337 | A | 14 January 2022 | CN | 113928337 | B | 20 October 2023 |
| CN | 114543825 | A | 27 May 2022 | WO | 2023134364 | A1 | 20 July 2023 |
| CN | 115014374 | A | 06 September 2022 | None | | | |
| CN | 108027242 | A | 11 May 2018 | WO | 2017091953 | A1 | 08 June 2017 |
| | | | | US | 2018273032 | A1 | 27 September 2018 |
| | | | | US | 10906539 | B2 | 02 February 2021 |
| | | | | JP | 2019504301 | A | 14 February 2019 |
| | | | | JP | 6785859 | B2 | 18 November 2020 |
| | | | | EP | 3385670 | A1 | 10 October 2018 |
| | | | | EP | 3385670 | A4 | 19 December 2018 |
| | | | | EP | 3385670 | B1 | 31 March 2021 |
| CN | 115493611 | A | 20 December 2022 | None | | | |
| JP | 2022094311 | A | 24 June 2022 | KR | 20220085005 | A | 21 June 2022 |
| | | | | KR | 102633251 | B1 | 02 February 2024 |
| | | | | DE | 102020215780 | A1 | 15 June 2022 |
| | | | | JP | 7307140 | B2 | 11 July 2023 |
| CN | 112164238 | A | 01 January 2021 | CN | 112164238 | B | 09 August 2022 |

Form PCT/ISA/210 (patent family annex) (July 2022)

**REFERENCES CITED IN THE DESCRIPTION**

**Patent documents cited in the description**

- CN 202310280482X